(19)

Europäisches
Patentamt

European
Patent Office

Office européen
des brevets

(11)  **EP 2 703 842 A1**

(12)  # EUROPEAN PATENT APPLICATION

(43) Date of publication:
**05.03.2014  Bulletin 2014/10**

(51) Int Cl.:
***G01S 19/24*** *(2010.01)*

(21) Application number: **13179372.1**

(22) Date of filing: **06.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.08.2012  CN 201210318552**
                **30.04.2013  US 201313874036**

(71) Applicant: **O2Micro, Inc.**
**Santa Clara, CA 95054 (US)**

(72) Inventors:
• **Zou, Jinghua**
  **610041 Chengdu Sichuan (CN)**
• **Gou, Juan**
  **610041 Chengdu Sichuan (CN)**
• **Su, Yen-Jung**
  **105 Taipei City, Taiwan (TW)**

(74) Representative: **Lippert, Stachow & Partner**
**Patentanwälte**
**Postfach 30 02 08**
**51412 Bergisch Gladbach (DE)**

(54)  **Method and apparatus for synchronizing navigation data**

(57)  Method, apparatus, and programs for synchronizing navigation data. Data synchronization is established between a receiver and a navigation device based on matching of a header of navigation data. The receiver receives the navigation data from the navigation device. If, subsequently, the data synchronization is interrupted, information related to the data synchronization from the receiver is retrieved. The data synchronization is then re-established between the receiver and the navigation device based on the retrieved information.

**EP 2 703 842 A1**

```
┌─────────────────────────────────────┐
│ ESTABLISH DATA SYNC BETWEEN RECEIVER │ ⌐302
│ AND NAVIGATION DEVICE BASED ON       │
│ MATCHING OF DATA HEADER              │
└─────────────────────────────────────┘
                  │
                  ▼
             ◇ DATA SYNC ◇  ⌐304
             ◇ INTERRUPTED? ◇
                  │
                 YES
                  │
                  ▼
┌─────────────────────────────────────┐
│ RETRIEVE INFO RELATED TO THE DATA    │ ⌐306
│ SYNC FROM RECEIVER                   │
└─────────────────────────────────────┘
                  │
                  ▼
┌─────────────────────────────────────┐
│ RE-ESTABLISH DATA SYNC BETWEEN       │ ⌐308
│ RECEIVER AND NAVIGATION DEVICE BASED │
│ ON THE RETRIEVED INFO                │
└─────────────────────────────────────┘
```

FIG. 3

**Description**

BACKGROUND

The disclosure relates generally to a method and apparatus for synchronizing navigation data.

A satellite navigation or SAT NAV system is a system of satellites that provide autonomous geo-spatial positioning with global coverage. It allows small electronic receivers to determine their location (longitude, latitude, and altitude) to within a few meters using time signals transmitted along a line-of-sight by radio from satellites. Receivers calculate the precise time as well as position, which can be used as a reference for navigation.

Modem navigation systems, such as the Global Positioning System (GPS) and BeiDou (Compass) navigation system, requires the precise sending time of navigation data from the navigation satellites, which can be calculated based on the Time of Week (TOW) and navigation bit count *bitcnt.* The sending time of navigation data $T_s$ may be calculated as follows:

$$T_s = TOW + bitcnt * cycle + T_h \qquad (1)$$

where, *cycle* represents the update cycle of the navigation bit count, which is 20 ms for the GPS system; $T_h$ is a high-precision measurement value. The message structure of the navigation data in the GPS system has a basic format (page) of a 1500-bit-long frame made up of five subframes, each subframe being 300 bits (6 seconds) long. The TOW of GPS satellites updates in each subframe, and the bit count represents the offset in one TOW update cycle of the last bit (current bit). Thus, the value of bit count in the GPS system is from 0 to 299. The TOW and bit count can be obtained after subframe synchronization in the GPS system.

Traditionally, the subframe synchronization is performed by matching the navigation message with the default subframe header (subframe header matching). For example, in the GPS system, the first N bit of each subframe is the header of the subframe. The traditional subframe synchronization method is performed by matching the subframe header in the navigation data stream. Once a matching is found, a parity bit in the same word of the subframe is further verified. Once the verification is passed, the subframe synchronization is established between the satellite and the receiver, and the receiver then starts to count the navigation bit for the navigation data received afterward. The bit count refreshes once it reaches its update cycle, e.g., 300 bits in the GPS system.

However, the known method for subframe synchronization is time consuming in certain situations because it requires the matching of the subframe header. In the GPS system, each subframe is 6 seconds long. If the header of the current subframe is missed, then the receiver has to wait for up to 6 seconds unit the next subframe is received in order to match the next subframe header. Moreover, the known method requires the verification of the parity bit after the subframe header matching. In a situation that the received signal from the satellites is weak, the verification of parity bit becomes difficult, thereby further increasing the time for subframe synchronization and the Time To First Fix (TTFF) of the receiver.

Accordingly, there exists a need for an improved solution for synchronizing navigation data to solve the above-mentioned problems.

BRIEF DESCRIPTION OF THE DRAWINGS

The embodiments will be more readily understood in view of the following description when accompanied by the below figures and wherein like reference numerals represent like elements, wherein:

FIG. 1 is a block diagram illustrating an example of a system for synchronizing navigation data including navigation satellites and a receiver, in accordance with one embodiment of the present disclosure;

FIG. 2 is a block diagram illustrating an example of a navigation processing unit of the receiver shown in FIG. 1, in accordance with one embodiment of the present disclosure;

FIG. 3 is a flow chart illustrating an example of a method for synchronizing navigation data by the navigation processing unit shown in FIG. 2, in accordance with one embodiment of the present disclosure;

FIG. 4 is a flow chart illustrating another example of the method for synchronizing navigation data by the navigation processing unit shown in FIG. 2, in accordance with one embodiment of the present disclosure;

FIG. 5 is a block diagram illustrating an example of a first rapid data synchronization module in the navigation processing unit shown in FIG. 2, in accordance with one embodiment of the present disclosure;

FIG. 6 is a flow chart illustrating an example of a method for synchronizing navigation data by the first rapid data synchronization module shown in FIG. 5, in accordance with one embodiment of the present disclosure;

FIG. 7 is a flow chart illustrating another example of the method for synchronizing navigation data by the first rapid data synchronization module shown in FIG. 5, in accordance with one embodiment of the present disclosure;

FIG. 8 is a block diagram illustrating an example of a second rapid data synchronization module in the navigation processing unit shown in FIG. 2, in accordance with one embodiment of the present disclosure;

FIG. 9 is a flow chart illustrating an example of a method for synchronizing navigation data by the second rapid data synchronization module shown in FIG. 8, in accordance with one embodiment of the present disclosure;

FIG. 10 is a flow chart illustrating another example of the method for synchronizing navigation data by the second rapid data synchronization module shown in FIG. 8, in accordance with one embodiment of the present disclosure;

FIG. 11 is a block diagram illustrating an example of a third rapid data synchronization module in the navigation processing unit shown in FIG. 2, in accordance with one embodiment of the present disclosure;

FIG. 12 is a flow chart illustrating an example of a method for synchronizing navigation data by the third rapid data synchronization module shown in FIG. 11, in accordance with one embodiment of the present disclosure;

FIG. 13 is a flow chart illustrating another example of the method for synchronizing navigation data by the third rapid data synchronization module shown in FIG. 11, in accordance with one embodiment of the present disclosure; and

FIG. 14 is a block diagram illustrating an example of the navigation processing unit including a processor and a memory, in accordance with one embodiment of the present disclosure.

SUMMARY

The present disclosure describes methods, apparatus, and programming for synchronizing navigation data.

In one example, a method for synchronizing navigation data is provided. Data synchronization is established between a receiver and a navigation device based on matching of a header of navigation data. The receiver receives the navigation data from the navigation device. If, subsequently, the data synchronization is interrupted, information related to the data synchronization from the receiver is retrieved. The data synchronization is then re-established between the receiver and the navigation device based on the retrieved information.

In another example, a receiver for navigation including a navigation processing unit is provided. The navigation processing unit includes a default data synchronization module, a synchronization information storage, and a rapid data synchronization module. The default data synchronization module is configured to establish data synchronization between the receiver and a navigation device based on matching of a header of navigation data. The receiver receives the navigation data from the navigation device. The synchronization information storage is configured to store information related to the data synchronization. The rapid data synchronization module is configured to if, subsequently, the data synchronization is interrupted, retrieve the information related to the data synchronization from the synchronization information storage. The rapid data synchronization module is also configured to re-establish the data synchronization between the receiver and the navigation device based on the retrieved information.

Other concepts relate to software for synchronizing navigation data. A software product, in accordance with this concept, includes at least one machine-readable non-transitory medium and information carried by the medium. The information carried by the medium may be executable program code data regarding parameters in association with a request or operational parameters, such as information related to a user, a request, or a social group, etc.

In still another example, a machine readable and non-transitory medium having information recorded thereon for synchronizing navigation data, wherein the information, when read by the machine, causes the machine to perform a series of steps. Data synchronization is established between a receiver and a navigation device based on matching of a header of navigation data. The receiver receives the navigation data from the navigation device. If, subsequently, the data synchronization is interrupted, information related to the data synchronization from the receiver is retrieved. The data synchronization is then re-established between the receiver and the navigation device based on the retrieved information.

DETAILED DESCRIPTION

Reference will now be made in detail to the embodiments of the present disclosure, examples of which are illustrated in the accompanying drawings. While the present disclosure will be described in conjunction with the embodiments, it will be understood that they are not intended to limit the present disclosure to these embodiments. On the contrary, the present disclosure is intended to cover alternatives, modifications, and equivalents, which may be included within the spirit and scope of the present disclosure as defined by the appended claims.

Furthermore, in the following detailed description of embodiments of the present disclosure, numerous specific details are set forth in order to provide a thorough understanding of the present disclosure. However, it will be recognized by one of ordinary skill in the art that the present disclosure may be practiced without these specific details. In other instances, well-known methods, procedures, components, and circuits have not been described in detail as not to unnecessarily obscure aspects of the embodiments of the present disclosure.

Embodiments in accordance with the present disclosure provide a method and apparatus for rapidly synchronizing navigation data without matching of subframe headers. The method and apparatus disclosed herein can reduce the TTFF time and/or increase the number of navigation satellites captured for navigation, thereby improving the navigation performance. Moreover, three different methods for rapid navigation data synchronization are disclosed in the present disclosure in order to adapt various situations in which navigation data synchronization is necessary, such as the receiver hot boot, restart, temporary signal loss, temporary processing interruption, etc. Additional advantages and novel features will be set forth in part in the description which follows, and in part will become apparent to those skilled in the art upon examination of the following and the accompanying drawings or may be learned by production or operation of the examples.

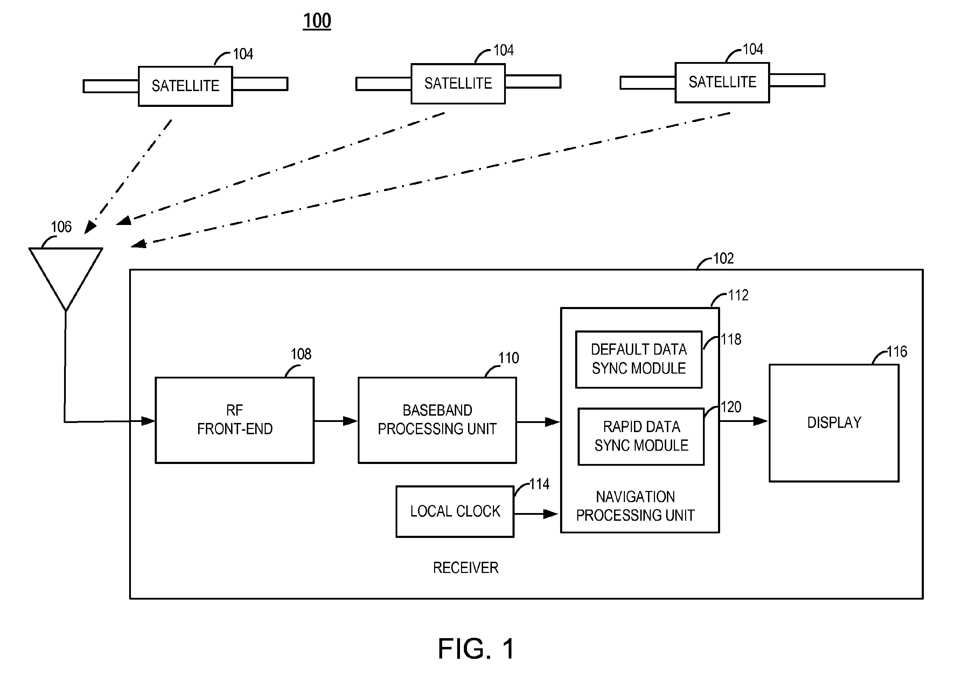

FIG. 1 illustrates one example of a system 100 for synchronizing navigation data, in accordance with one embodiment of the present disclosure. The system 100 may be, for example, the GPS system, BeiDou (Compass) system, or any other suitable navigation system. The system 100 may include a receiver 102 and one or more navigation devices, such as satellites 104, which stimulatingly broadcast modulated navigation signals to the receiver 102.. Navigation data may be encoded using code division multiple access (CDMA) or any other spread-spectrum technique allowing messages from individual satellites to be distinguished from each other based on unique encodings for each satellite.

The receiver 102 in this example includes an antenna 106, a radio-frequency (RF) front-end 108, a baseband processing unit 110, a navigation processing unit 112, a local clock 114, and a display 116. The receiver 102 may be a discrete electronic device for providing the current location and time to a user or a module integrated with another device, such as, but not limited to, a portable device, e.g., smart phone, tablet, gaming console, a computer, or a vehicle. The antennal 106 receives the modulated RF signals from the satellites 104, and the RF-front end 108 converts the signals to a frequency suitable for digital signal processing. The baseband processing unit 110 may include one or more processors configured to extract the navigation data received from each satellite 104 by removing the carrier signals and the coarse/acquisition (C/A) code.

In this example, the navigation processing unit 112 is configured to decode the navigation data and use the decoded information to determine the satellite positions and sending times using a default data synchronization module 118 and one or more rapid data synchronization modules 120. The decoded information includes, for example, satellite clock, time relationship, ephemeris, almanac, etc. The navigation processing unit 112 is further configured to calculate the current position of the receiver 102 based on the satellite positions and sending times. The local clock 114 of the receiver 102 may be configured to provide a local reference time to the navigation processing unit 112. For example, the local clock 114 may be synchronized with the satellite clock to achieve a timing reference with, for example, 1 ms accuracy.

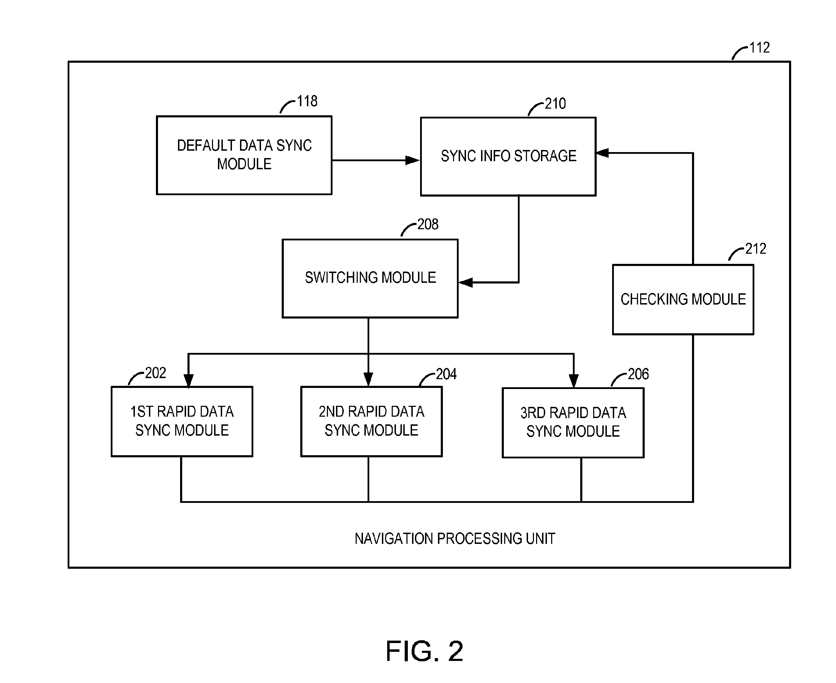

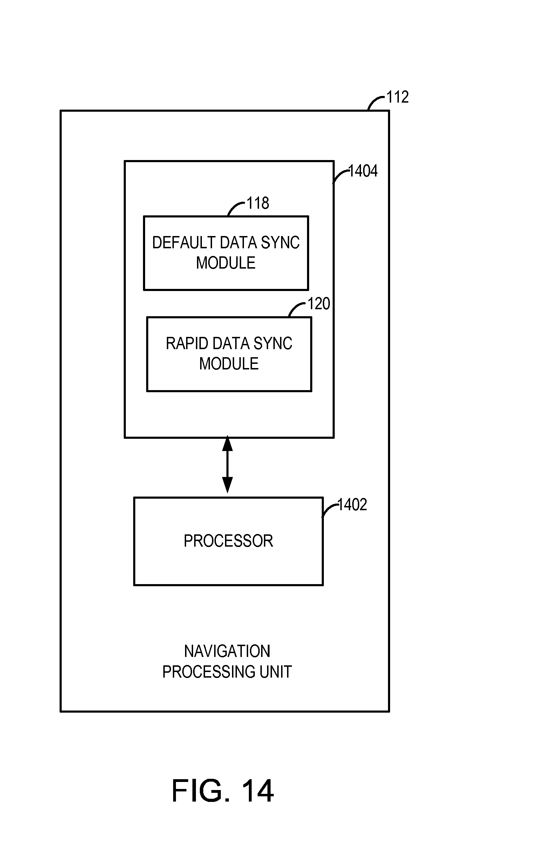

FIG. 2 illustrates one example of the navigation processing unit 112 in the receiver 102, in accordance with one embodiment of the present disclosure. In this example, the navigation processing unit 112 includes the default data synchronization module 118, the first rapid data synchronization module 202, the second rapid data synchronization module 204, the third rapid data synchronization module 206, a switching module 208, a synchronization information storage 210, and a checking module 212. "Module" and "unit" referred to herein are any suitable executing software module, hardware, executing firmware or any suitable combination thereof that can perform the desired function, such as programmed processors, discrete logic, for example, state machine, to name a few. In one example, as shown in FIG. 14, the navigation processing unit 112 may be implemented by one or more processors 1402 and memory 1404. In this example, the above-mentioned modules, such as the default data synchronization module 118 and rapid data synchronization modules 120 may be software programs that can be loaded into the memory 1404 and executed by the processor 1402. The processor 1402 may be any suitable processing unit, such as but not limited to, a microprocessor, a microcontroller, a central processing unit, an electronic control unit, etc. The memory 1404 may be, for example, a discrete memory or a unified memory integrated with the processor 1402.

The default data synchronization module 118 in this example is configured to establish initial data synchronization between the receiver 102 and one or more satellites 104 based on matching of a header of navigation data. In the GPS system, as described above, this may be done by subframe header matching and parity bit verification. In one example, once the receiver 102 is powered-on or restarted, the initial data synchronization is established by the default data synchronization module 118 using the known method. In this example, once the data synchronization is established, and the receiver 102 starts to work, the information related to the data synchronization is stored in the synchronization information storage 210. The information includes, for example, ephemeris of the satellite 104, calculated current position of the receiver 102, sending time of navigation data (TOW and navigation bit count), information related to clock synchronization between the satellite clock and the local clock, i.e., time relationship, information related to the local clock, or any other suitable information. In this example, the information may be continuously updated and kept in the synchronization information storage 210 even after the hot boot or restart.

Each of the rapid data synchronization modules 202, 204, 206 in this example is configured to if, subsequently, the initial data synchronization is interrupted, retrieve the information related to the data synchronization from the synchronization information storage 210 and re-establish the data synchronization between the receiver 102 and the satellite 104 based on the retrieved information. The initial data synchronization may be interrupted for different reasons, such as, for example, hot boot, restart, temporary GPS signal loss, temporary processing interruption. The available information that can be retrieved from the synchronization information storage 210 may be different in the different scenarios of data synchronization interruption. In this example, the switching module 208 is configured to determine which rapid data synchronization module is suitable for re-establishing the data synchronization based on the available information from the initial data synchronization. The details as to choosing the appropriate data synchronization module and method will be described later. Once the data synchronization is re-established by one of the rapid data synchronization modules 202, 204, 206, the checking module 212 may be responsible for checking the reliability of the synchronization information. In one example, if the synchronization information obtained from one rapid data synchronization module fails the test, then the switching module 208 may cause another rapid data synchronization module to re-establish the data synchronization. The verified synchronization information, e.g., TOW and navigation bit count of the sending time, may be stored in the synchronization information storage 210.

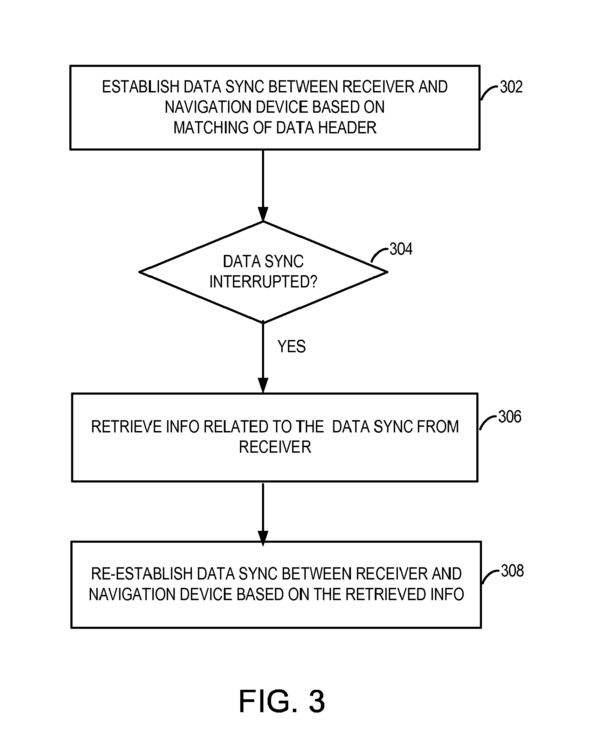

FIG. 3 depicts one example of a method for synchronizing navigation data, in accordance with one embodiment of the present disclosure. It will be described with reference to the above figures. However, any suitable module or unit may be employed. Beginning at block 302, data synchronization between a receiver and a navigation device, e.g., a satellite is established based on matching of a header of navigation data, e.g., the subframe header in the GPS system. The receiver receives the navigation data from the navigation device. As described above, this may be performed by the default data synchronization module 118 of the navigation processing unit 112. Proceeding to block 304, whether the established data synchronization is subsequently interrupted is detected. As described above, this may be performed by the switching module 208 of the navigation processing unit 112. If the data synchronization is interrupted, at block 306, information related to the data synchronization is retrieved from the receiver. Moving to block 308, based on the retrieved information, the data synchronization is re-established between the receiver and the navigation device. As described above, blocks 306, 308 may be performed by one of the rapid data synchronization modules 202, 204, 206 of the navigation processing unit 112.

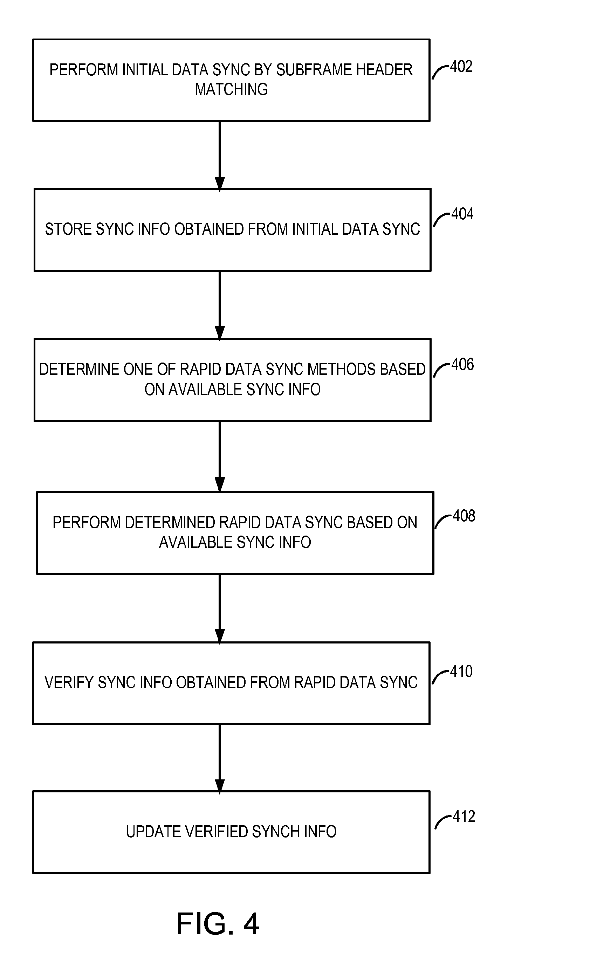

FIG. 4 depicts another example of the method for synchronizing navigation data, in accordance with one embodiment of the present disclosure. It will be described with reference to the above figures. However, any suitable module or unit may be employed. Beginning at block 402, the initial data synchronization between a satellite and a receiver is performed by subframe header matching. As described above, this may be performed by the default data synchronization module 118 of the navigation processing unit 112. Moving to block 404, information obtained from the initial data synchronization is stored. The information includes, for example, ephemeris of the satellite 104, calculated current position of the receiver 102, sending time of navigation data (TOW and navigation bit count), information related to clock synchronization between the satellite clock and the local clock, i.e., time relationship, information related to the local clock, or any other suitable information. As described above, this may be performed by the synchronization information storage 210 of the navigation processing unit 112. At block 406, one of the rapid data synchronization methods is determined based on the available information obtained from the initial data synchronization. In other words, different rapid data synchronization methods may be applied to different situations in which rapid data synchronization is necessary for re-establishing the data synchronization. As described above, this may be performed by the switching module 208 of the navigation processing unit 112. Proceeding to block 408, data synchronization is performed using the determined rapid data synchronization method based on the available information obtained from the initial data synchronization. In particular, synchronization information, such as TOW and navigation bit count of the sending time, is obtained. As described above, this may be performed by one of the rapid data synchronization modules 202, 204, 206 of the navigation processing unit 112. At block 410, the obtained synchronization information is verified to ensure the reliability of the rapid data synchronization. As described above, this may be performed by the checking module 212 of the navigation processing unit 112. Once the obtained synchronization information passes the test, it is updated at block 412 and stored in the synchronization information storage 210.

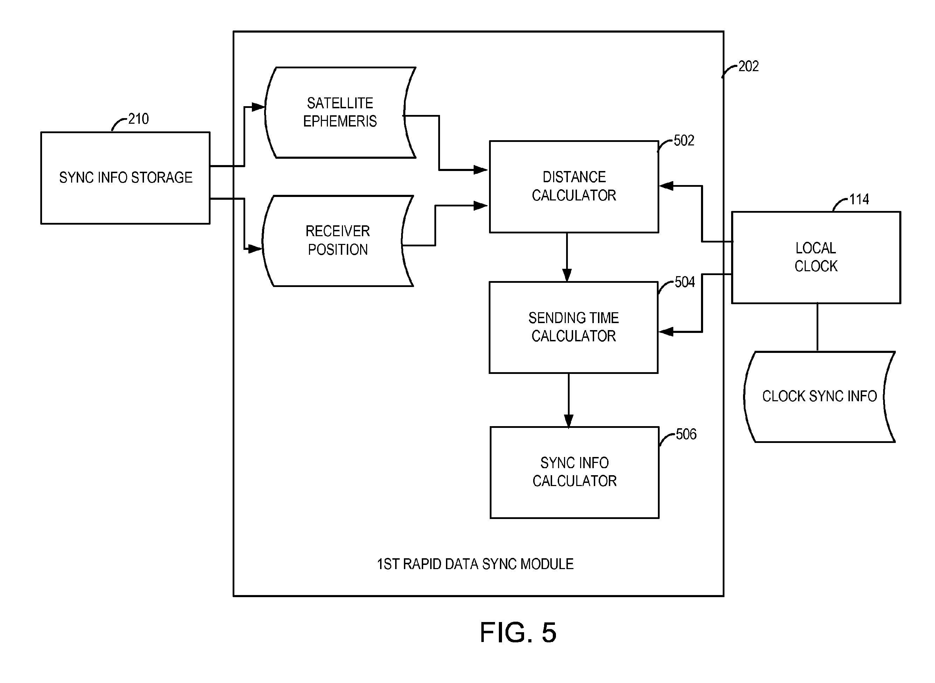

FIG. 5 is a block diagram illustrating an example of the first rapid data synchronization module 202 in the navigation processing unit 112, in accordance with one embodiment of the present disclosure. The first rapid data synchronization module 202 may be applied when the satellite ephemeris, receiver position, and clock synchronization information are all available after the initial data synchronization. In one example, the first rapid data synchronization module 202 may be applied to reduce the TTFF time after hot boot of the receiver 102. In another example, the GPS signals may be shielded or lost when the receiver 102 moves into certain areas after the initial data synchronization. Once the signals recover, the first rapid data synchronization module 202 may be applied to re-establish the data synchronization with the satellite that satisfies the above-mentioned conditions. In this example, the first rapid data synchronization module 202 includes a distance calculator 502, a sending time calculator 504, and a synchronization information calculator 506.

In this example, the distance calculator 502 is configured to estimate a distance D between a satellite 104 and the receiver 102. The receiver 102 receives navigation data from the satellite 104. The distance D may be calculated as follows:

$$D = \sqrt{(P_{sv}(x) - P_r(x))^2 + (P_{sv}(y) - P_r(y))^2 + (P_{sv}(z) - P_r(z))^2} \qquad (2)$$

where, $P_{sv}$ represents the position of the satellite 104 and $P_r$ is the position of the receiver 102.

To calculate the distance, the distance calculator 502 is configured to obtain the ephemeris of the satellite 104 and the position of the receiver 102 from the synchronization information storage 210 of the receiver 102. The current position of the receiver 102 may be different from the one stored in the synchronization information storage 210 if the receiver 102 has been moving. Depending on the length of a navigation bit, the offset of receiver position needs to be less than a threshold value in order to apply the first rapid data synchronization module 202. In other words, the receiver 102 cannot move too much since the last data synchronization when the first rapid data synchronization module 202 is applied. In one example, for navigation data with a 2 ms navigation bit, the offset of receiver position may be less than 200 Km. In another example, for navigation data with a 20 ms navigation bit, the offset of receiver position may be less than 2000 Km.

In order to estimate the position of the satellite 104 using the stored ephemeris, the satellite clock is necessary. In this example, the clock synchronization between the satellite lock and the local clock 114 has been established. In other words, the time relationship between the satellite clock and the local clock 114 is known. Assuming the local clock 114 runs linearly, the satellite clock then may be estimated by the local clock 114 in order to calculate the position of the satellite 104.

The sending time calculator 504 in this example is configured to determine the sending time $T_s$ of the navigation data sent from the satellite 104 based on the distance D between the satellite 104 and the receiver 102. The sending time $T_s$ may be calculated as follows:

$$T_s = T_r - D/C \qquad (3)$$

where, $T_r$ is represents receiving time of the navigation data, and C is the speed of light. As the local clock 114 has been synchronized with the satellite clock, the local time of receiving the navigation data can be applied as $T_r$ in Equation (3). The transmission time of navigating data from the satellite 104 to the receiver 102 is calculated based on the distance D estimated by the distance calculator 502 and the speed of light C. The sending time $T_s$ is then obtained based on the transmission time of the navigation data and the receiving time $T_r$ of navigation data.

The synchronization information calculator 506 in this example is configured to compute synchronization information based on the sending time $T_s$ of navigation data. As mentioned before, the synchronization information includes TOW and navigation bit count of the sending time, and is used for synchronizing the navigation data. The synchronization information calculator 506 may first calculate TOW based on the determined sending time $T_s$ of the navigation data as follows:

$$TOW = round\left(\frac{T_s}{Cycle1}\right) * Cycle1 \qquad (4)$$

where, *cycle1* represents the update cycle of TOW.

The synchronization information calculator 506 then may calculate navigating bit count $N_{navbit}$ based on the determined sending time $T_s$ of the navigation data and TOW as follows:

$$N_{navbit} = round\left(\frac{T_s - TOW}{Cycle2}\right) * Cycle2 \qquad (5)$$

where, *cycle2* represents the update cycle of navigation bit count.

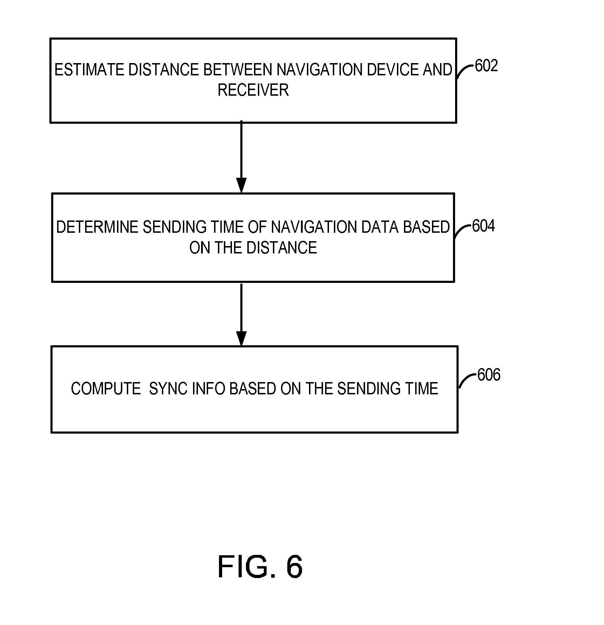

FIG. 6 depicts one example of a method for synchronizing navigation data, in accordance with one embodiment of the present disclosure. It will be described with reference to the above figures. However, any suitable module or unit may be employed. Beginning at block 602, a distance between a navigation device, e.g., a satellite, and a receiver is estimated. The receiver receives navigation data from the navigation device. As described above, this may be performed by the distance calculator 502 of the first rapid data synchronization module 202. Proceeding to block 604, a sending time of the navigation data sent from the navigation device is determined based on the distance between the navigation device and receiver. As described above, this may be performed by the sending time calculator 504 of the first rapid data synchronization module 202. At block 606, synchronization information is computed based on the sending time of the navigation data. The synchronization information, e.g., TOW and navigation bit count of the sending time, is used for synchronizing the navigation data. As described above, this may be performed by the synchronization information calculator 506 of the first rapid data synchronization module 202.

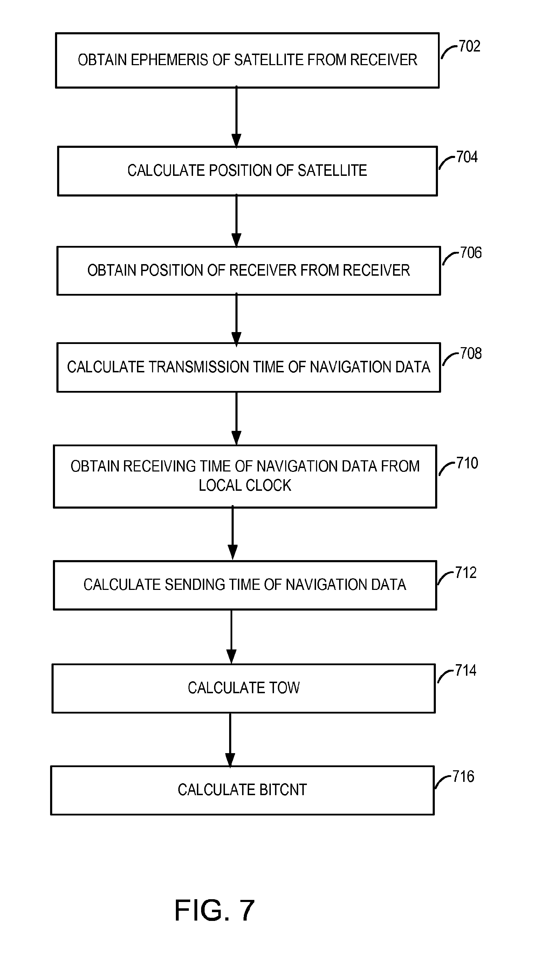

FIG. 7 depicts another example of the method for synchronizing navigation data, in accordance with one embodiment of the present disclosure. It will be described with reference to the above figures. However, any suitable module or unit may be employed. Beginning at block 702, ephemeris of a satellite 104 that has been previously stored is obtained from the receiver 102. As the local clock 114 of the receiver 102 has been synchronized with the satellite clock, the position of the satellite 104 is then calculated based on the ephemeris and the local clock 114 at block 704. The position of the receiver 102 stored in the receiver 102 is obtained at block 706. This position may be assumed as the current position of the receiver 102 as long as the offset does not exceed a threshold value determined based on the length of the navigation bit. At block 708, the transmission time of navigation data from the satellite 104 to the receiver 102 is calculated based on the distance between the satellite 104 and the receiver 102. Moving to block 710, the receiving time of the navigation data is obtained from the local clock 114. As mentioned before, as the local clock 114 of the receiver 102 has been synchronized with the satellite clock, the local clock may be used to provide the receiving time of the navigation data. At block 712, the sending time of the navigation data is calculated based on the receiving time of the navigation data and the transmission time of the navigation data using Equation (3). Moving to block 714, TOW of the sending time is calculated based on the sending time using Equation (4). At block 716, navigation bit count of the sending time is calculated based on TOW and the sending time using Equation (5).

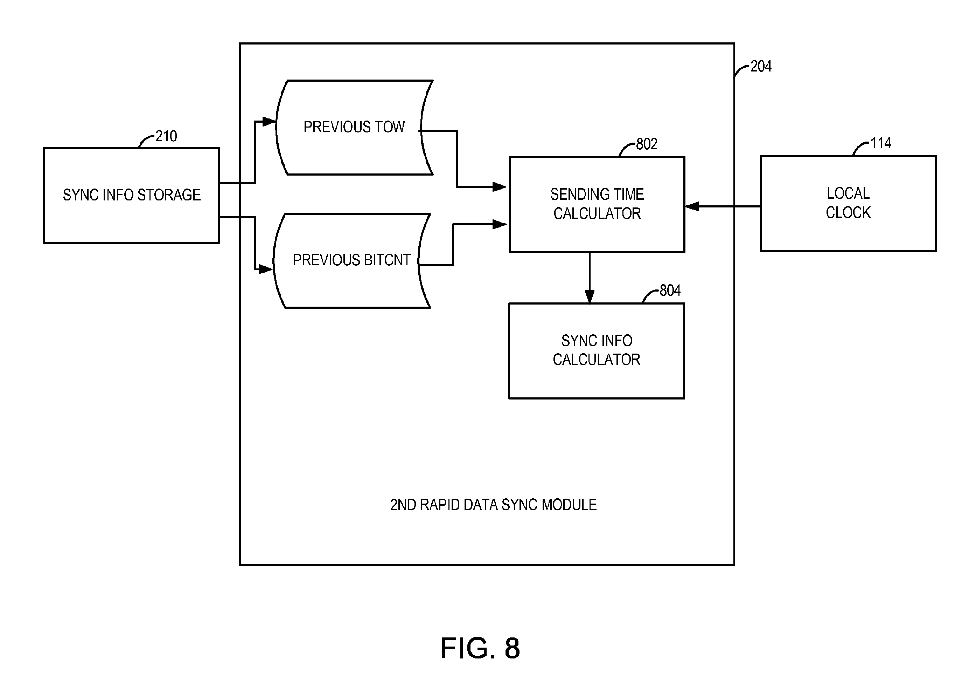

FIG. 8 is a block diagram illustrating an example of the second rapid data synchronization module 204 in the navigation processing unit 112, in accordance with one embodiment of the present disclosure. The second rapid data synchronization module 204 may be applied when previous synchronization information, e.g., TOW and navigation bit count, obtained from initial data synchronization is available. The second rapid data synchronization module 204 also requires that the local clock 114 of the receiver 102 continuously runs for a time interval after the data synchronization was interrupted. For example, power has been continuously supplied to the receiver 102. In one example, the GPS signals may be shielded or lost when the receiver 102 moves into certain areas after the initial data synchronization. Once the signals recover, the second rapid data synchronization module 204 may be applied to re-establish the data synchronization with the satellite that satisfies the above-mentioned conditions. In another example, navigation data stream may be interrupted when the receiver 102 processes some special jobs with higher priorities. It is noted that, different from the first rapid data synchronization module 202, the second rapid data synchronization module 204 does not require that the clock synchronization has been established between the local clock 114 and satellite lock and also does not need the previously stored ephemeris of the satellite 104. In this example, the second rapid data synchronization module 204 includes a sending time calculator 802 and a synchronization information calculator 804.

The sending time calculator 802 is this example is configured to obtain the previous synchronization information, e.g., TOW and navigation bit count before the navigation data stream is interrupted, from the synchronization information storage 210 of the receiver 102. In other words, previous synchronization information has been obtained and kept when the initial data synchronization is interrupted. The sending time calculator 802 is also responsible for determining the sending time $T_{s2}$ of the current navigation data sent from the satellite 104 based on the previous synchronization information as follows:

$$T_{s2} = T_{s1} + \Delta T = TOW_1 + N_{navibit1} * Cycle + \Delta T \qquad (6)$$

where, $TOW_1$ and $Nnavbit_1$ represent the TOW and navigation bit count before the navigation data stream is interrupted, respectively; cycle represents the update cycle of the navigation bit count; $\Delta T$ represents the local time interval between receiving the previous and current navigation data, i.e., the duration of navigation data stream interruption.

It is noted that, as the relative speed between the receiver 102 and satellite 104 may change during the time interval $\Delta T$, the length of a navigation bit may change accordingly. Also, as local clock drift may be affected by temperature and time, the time interval $\Delta T$ obtained from the local clock 114 may not be accurate. Thus, in some examples, the time interval $\Delta T$ is than 1 hour in order to apply the second rapid data synchronization module 204.

The synchronization information calculator 804 in this example is configured to compute the current synchronization information based on the sending time $T_{s2}$ of the current navigation data. As mentioned before, the current synchronizing information includes TOW and navigation bit count of the current sending time and is used for synchronizing the current navigation data. The synchronization information calculator 804 may first calculate TOW based on the determined sending time $T_{s2}$ of the current navigation data as follows:

$$TOW_2 = round(\frac{T_{s2}}{Cycle1}) * Cycle1 \qquad (7)$$

where, *cycle1* represents the update cycle of TOW.

The synchronization information calculator 804 then may calculate navigating bit count $N_{navbit2}$ based on TOW and sending time $T_{s2}$ of the current navigation data as follows:

$$N_{navbit2} = round(\frac{T_{s2} - TOW}{Cycle2}) * Cycle2 \qquad (8)$$

where, *cycle2* represents the update cycle of navigation bit count.

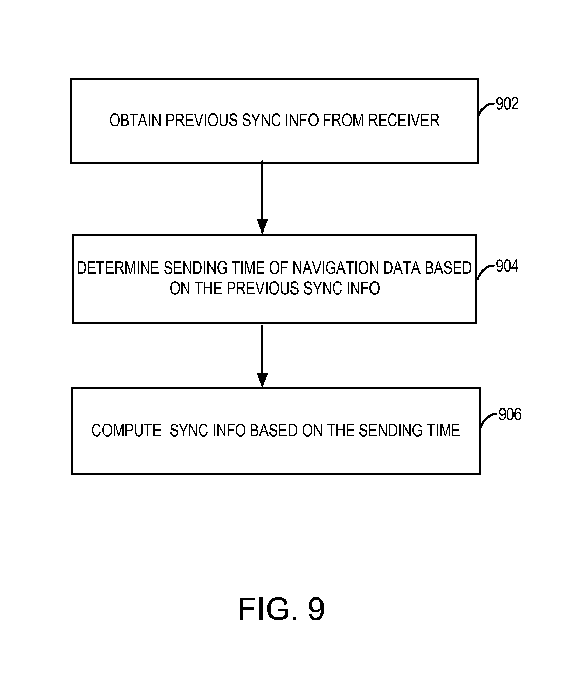

FIG. 9 depicts one example of a method for synchronizing navigation data, in accordance with one embodiment of the present disclosure. It will be described with reference to the above figures. However, any suitable module or unit may be employed. Beginning at block 902, first synchronization information is obtained from a receiver. The first synchronization information, e.g., the previously stored TOW and navigation bit count, was used for synchronizing first navigation data received by the receiver from a navigation device, e.g., a satellite. Proceeding to block 904, a sending time of second navigation data sent from the navigation device is determined based on the first synchronization information. As described above, blocks 902, 904 may be performed by the sending time calculator 802 of second rapid data synchronization module 204. At block 906, second synchronizing information is computed based on the sending time of the second navigation data. The synchronization information, e.g., TOW and navigation bit count of the second sending time, is used for synchronizing the second navigation data. As described above, this may be performed by the synchronization information calculator 804 of the second rapid data synchronization module 204.

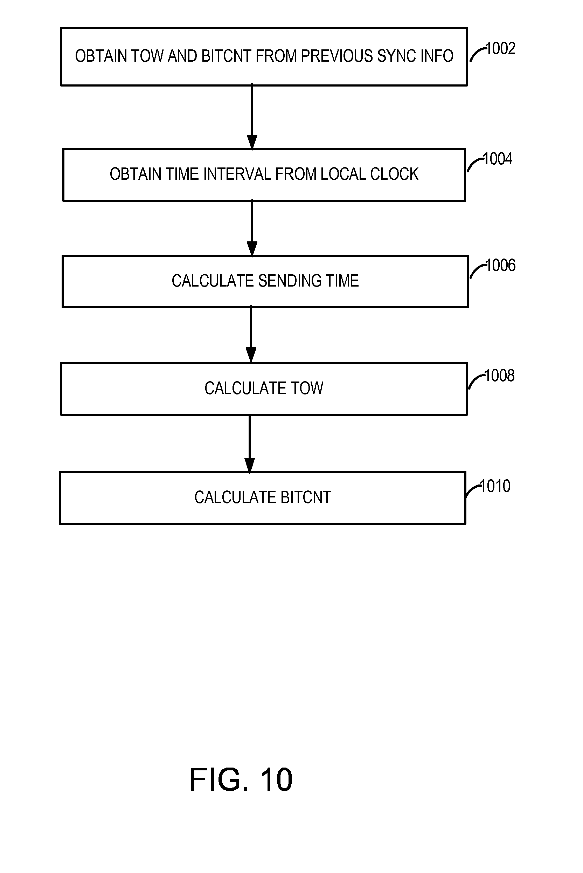

FIG. 10 depicts another example of the method for synchronizing navigation data, in accordance with one embodiment of the present disclosure. It will be described with reference to the above figures. However, any suitable module or unit may be employed. Beginning at block 1002, TOW and navigation bit count before the navigation data stream is interrupted are obtained from the previous synchronized information stored in the synchronized information storage 210. At block 1004, the time interval between receiving the previous and current navigation data, i.e., the duration of navigation data stream interruption, is obtained from the local lock 114. Moving to block 1006, the current sending time is calculated based on the time interval and previous TOW and navigation bit count using Equation (6). At block 1008, TOW of the current sending time is calculated based on the current sending time using Equation (7). At block 1010, navigation bit count of the current sending time is calculated based on current TOW and current sending time using Equation (8).

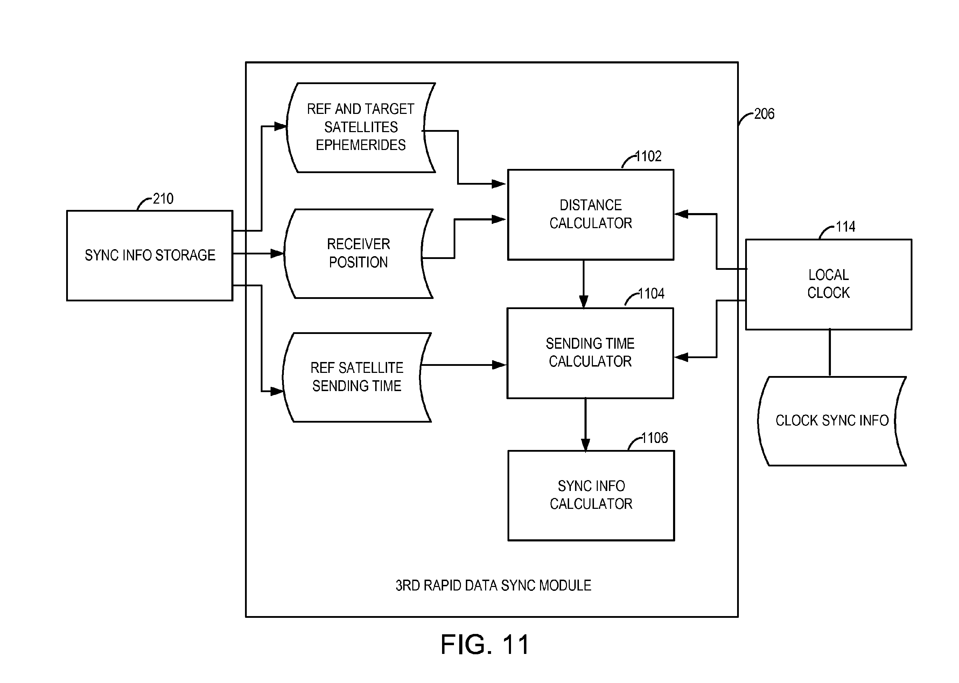

FIG. 11 is a block diagram illustrating an example of the third rapid data synchronization module 206 in the navigation processing unit 112, in accordance with one embodiment of the present disclosure. The third rapid data synchronization module 206 may be applied when data synchronization between the receiver 102 and a reference satellite has been established, i.e., the current sending time of the navigation data from the reference satellite is available, and when ephemerides of both the reference satellite and a target satellite (the satellite to be data synchronized with the receiver 102) and the position of the receiver 102 are available. In one example, the third rapid data synchronization module 206 may be applied when the receiver 102 can receive strong signals from at least one navigation satellite. For example, in the GPS system, at least four navigation satellites are necessary for navigation. If the receiver 102 can only get good signals from one satellite, data synchronization may be established between the receiver 102 and the reference satellite using the default data synchronization module 118, and data synchronization between the receiver 102 and other satellites may be rapidly established by applying the third rapid data synchronization module 206. In this example, the third rapid data synchronization module 206 includes a distance calculator 1102, a sending time calculator 1104, and a synchronization information calculator 1106.

In this example, the distance calculator 1102 is configured to estimate a first distance $D_{sv\_ref}$ between the reference satellite and the receiver 102. The distance $D_{sv\_ref}$ may be calculated as follows:

$$D_{sv\_ref} = \sqrt{(P_{sv\_ref}(x) - P_r(x))^2 + (P_{sv\_ref}(y) - P_r(y))^2 + (P_{sv\_ref}(z) - P_r(z))^2} \qquad (9)$$

where, $P_{sv\_ref}$ is the position of the reference satellite, and $P_r$ is the position of the receiver 102. The distance calculator 1102 is also configured to estimate a second distance $D_{sv}$ between the target satellite and the receiver 102. The distance

$D_{sv}$ may be calculated as follows:

$$D_{sv} = \sqrt{(P_{sv}(x) - P_r(x))^2 + (P_{sv}(y) - P_r(y))^2 + (P_{sv}(z) - P_r(z))^2} \qquad (10)$$

Where, $P_{sv}$ is the position of the target satellite.

To calculate the first and second distances $D_{sv\_ref}$, $D_{sv}$, the distance calculator 1102 is further configured to obtain the ephemerides of the reference and target satellites and the position of the receiver 102 from the synchronization information storage 210. The current position of the receiver 102 may be different from the one stored in the synchronization information storage 210 if the receiver 102 has been moving. Depending on the length of a navigation bit, the offset of receiver position needs to be less than a threshold value in order to apply the third rapid data synchronization module 206. In other words, the receiver 102 cannot move too much since the last data synchronization when the third rapid data synchronization module 206 is applied. In one example, for navigation data with a 2 ms navigation bit, the offset of receiver position may be less than 200 Km. In another example, for navigation data with a 20 ms navigation bit, the offset of receiver position may be less than 2000 Km.

The sending time calculator 1104 in this example is configured to determine, based on a first sending time $T_{s\_ref}$ of the navigation data sent from the reference satellite and the first and second distances $D_{sv\_ref}$, $D_{sv}$, a second sending time $T_s$ of the navigation data sent from the target satellite. The sending time calculator 1104 may first calculate a first transmission time $T_{trans\_ref}$ of the reference satellite based on the first distance $D_{sv\_ref}$ and a second transmission time $T_{trans}$ of the target satellite based on the second distance $D_{sv}$ as follows:

$$T_{trans\_ref} = \frac{D_{sv\_ref}}{C} \qquad (11)$$

$$T_{trans} = \frac{D_{sv}}{C} \qquad (12)$$

where, C represents the speed of light.

The difference between the local receiving time of current navigation data from the reference satellite and the local receiving time of current navigation data from the target satellite can be calculated as follows:

$$\Delta T_r = T_r - T_{r\_ref} = (T_s + T_{trans}) - (T_{s\_ref} + T_{trans\_ref}) \qquad (13)$$

where, $T_r$ represents the local receiving time of current navigation data from the target satellite; $T_{r\_ref}$ represents the local receiving time of current navigation data from the reference satellite; $T_s$ represents the sending time of current navigation data from the target satellite; $T_{s\_ref}$ represents the sending time of current navigation data from the reference satellite.

According to Equation (13), the sending time $T_s$ of current navigation data from the target satellite may be calculated as follows:

$$T_s = T_r - T_{r\_ref} + T_{s\_ref} + T_{trans\_ref} - T_{trans} \qquad (14).$$

The synchronization information calculator 1106 in this example is configured to compute synchronization information based on the sending time $T_s$ of target satellite. As mentioned before, the synchronization information includes TOW and navigation bit count of sending time and is used for synchronizing the navigation data received from the target satellite. The synchronization information calculator 1106 may first calculate TOW based on the determined sending time $T_s$ of the navigation data as follows:

$$TOW = round(\frac{T_s}{Cycle1}) * Cycle1 \qquad (15)$$

where, *cycle1* represents the update cycle of TOW.

The synchronization information calculator 1106 then may calculate navigating bit count $N_{navbit}$ based on TOW and sending time $T_s$ of the navigation data as follows:

$$N_{navbit} = round(\frac{T_s - TOW}{Cycle2}) * Cycle2 \qquad (16)$$

where, *cycle2* represents the update cycle of navigation bit count.

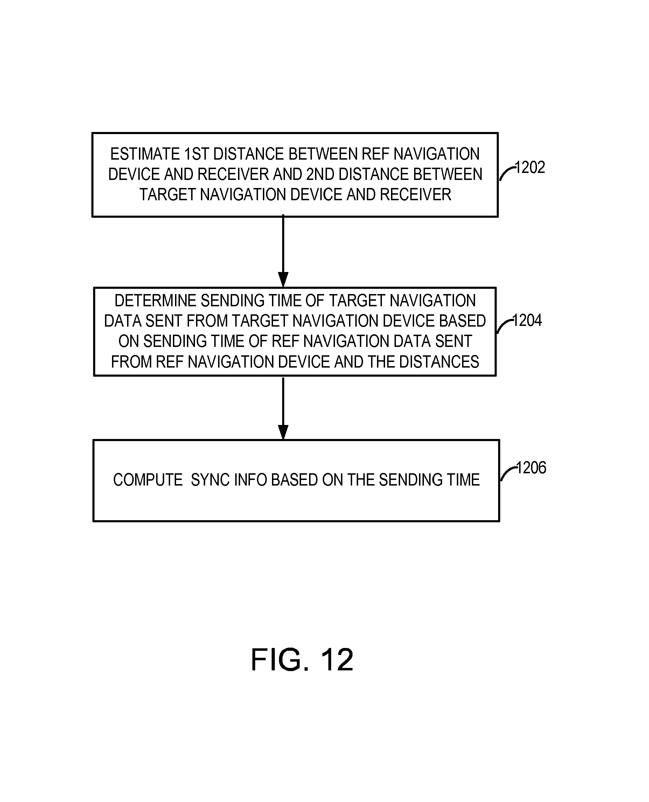

FIG. 12 depicts one example of a method for synchronizing navigation data, in accordance with one embodiment of the present disclosure. It will be described with reference to the above figures. However, any suitable module or unit may be employed. Beginning at block 1202, a first distance between a first navigation device, e.g., a reference satellite, and a receiver and a second distance between a second navigation device, e.g., a target satellite, and the receiver are estimated. The receiver receives first and second navigation data from the first and second navigation devices, respectively. As described above, this may be performed by the distance calculator 1102 of the third rapid data synchronization module 206. Proceeding to block 1204, based on a first sending time of the first navigation data sent from the first navigation device and the first and second distances, a second sending time of the second navigation data sent from the second navigation device is determined. As described above, this may be performed by the sending time calculator 1104 of the third rapid data synchronization module 206. At block 1206, synchronization information of the second navigation device is computed based on the second sending time of the second navigation data. The synchronization information, e.g., TOW and navigation bit count of sending time, is used for synchronizing the second navigation data. As described above, this may be performed by the synchronization information calculator 1106 of the third rapid data synchronization module 206.

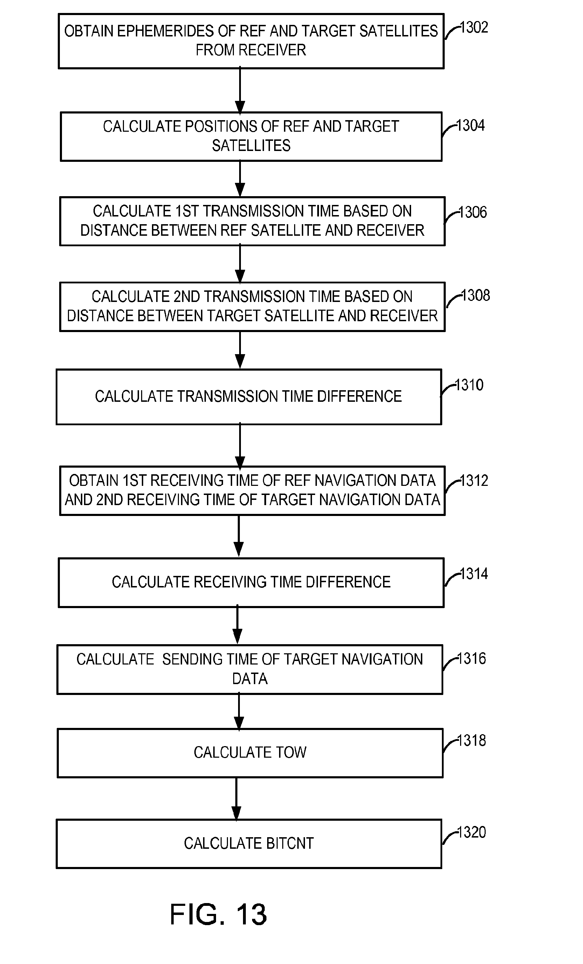

FIG. 13 depicts another example of the method for synchronizing navigation data, in accordance with one embodiment of the present disclosure. It will be described with reference to the above figures. However, any suitable module or unit may be employed. Beginning at block 1302, ephemerides of a reference satellite and a target satellite are obtained from the receiver 102. The positions of the reference and target satellite are then calculated based on the ephemerides at block 1304. The position of the receiver 102 has been previously stored in the receiver 102. The first and second transmission time of navigation data from the reference and target satellites to the receiver are calculated at blocks 1306, 1308, respectively. The difference between the first and second transmission times is calculated at block 1310. Moving to block 1312, the first and second receiving times of the current navigation data from the reference and target satellites are obtained from the local clock 114. The receiving time difference is then calculated at block 1314. At block 1316, the sending time of the current navigation data from the target satellite is calculated based on the transmission time difference, receiving time difference, and the sending time of the current navigation data from the reference satellite using Equation (14). Moving to block 1318, TOW of the sending time is calculated based on the sending time using Equation (15). At block 1320, navigation bit count of the sending time is calculated based on TOW and the sending time using Equation (16).

Experiments have been performed to demonstrate the TTFF performance increase by the methods and apparatus disclosed in the present disclosure.

In a first experiment, the TTFF time after hot boot is tested. An antenna is connected to two GPS receivers through a power splitter. The first receiver employs only the default data synchronization module with the traditional navigation data synchronization method, while the second receiver also employs the rapid data synchronization modules and methods disclosed in the present disclosure. When both receivers are powered-on, hot boot commands are sent to the two receivers, and the TTFF times are measured as follows (5 tests are performed, and about 8 satellites are available):

TABLE 1

| Receiver 1 | Receiver 2 |
| --- | --- |
| 8s | 2s |
| 5s | 2s |

(continued)

| Receiver 1 | Receiver 2 |
|---|---|
| 9s | 2s |
| 7s | 2s |
| 4s | 2s |

In a second experiment, the TTFF time after receiver restart is tested. An antenna is connected to two GPS receivers through a power splitter. The first receiver employs only the default data synchronization module with the traditional navigation data synchronization method, while the second receiver also employs the rapid data synchronization modules and methods disclosed in the present disclosure. Two receivers are restarted after their power supplies are disconnected, and the TTFF times are measured as follows (5 tests are performed, and about 8 satellites are available):

TABLE 2

| Receiver 1 | Receiver 2 |
|---|---|
| 20s | 11s |
| 45s | 23s |
| 36s | 25s |
| 24s | 15s |
| 40s | 18s |

Aspects of the method for synchronizing navigation data, as outlined above, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another. Thus, another type of media that may bear the software elements includes optical, electrical, and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Hence, a machine readable medium may take many forms, including but not limited to, a tangible storage medium, a carrier wave medium or physical transmission medium. Non-volatile storage media include, for example, optical or magnetic disks, such as any of the storage devices in any computer(s) or the like, which may be used to implement the system or any of its components as shown in the drawings. Volatile storage media include dynamic memory, such as a main memory of such a computer platform. Tangible transmission media include coaxial cables; copper wire and fiber optics, including the wires that form a bus within a computer system. Carrier-wave transmission media can take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer can read programming code and/or data. Many of these forms of computer readable media may be involved in carrying one or more sequences of one or more instructions to a processor for execution.

Those skilled in the art will recognize that the present disclosure is amenable to a variety of modifications and/or enhancements. For example, although the implementation of various components described above may be embodied in a hardware device, it can also be implemented as a software only solution - e.g., an installation on an existing server. In addition, the "module," "unit," or ""logic" as disclosed herein can be implemented as a firmware, firmware/software combination, firmware/hardware combination, or a hardware/firmware/so ftware combination.

While the foregoing description and drawings represent embodiments of the present disclosure, it will be understood that various additions, modifications, and substitutions may be made therein without departing from the spirit and scope of the principles of the present disclosure as defined in the accompanying claims. One skilled in the art will appreciate that the present disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the present disclosure being indicated by the appended claims and their legal equivalents, and not limited to the foregoing description.

**Claims**

1.  A method implement on a machine having a processor and memory for synchronizing navigation data, the method comprising the steps of:

    establishing data synchronization between a receiver and a navigation device based on matching of a header of navigation data, wherein the receiver receives the navigation data from the navigation device;
    if, subsequently, the data synchronization is interrupted, retrieving information related to the data synchronization from the receiver; and
    re-establishing the data synchronization between the receiver and the navigation device based on the retrieved information.

2.  The method of claim 1, wherein the navigation device includes a satellite.

3.  The method of claim 1 or 2, wherein the information related to the data synchronization includes at least one of:

    an ephemeris of the navigation device;
    a position of the receiver;
    time of week (TOW) and navigation bit count;
    information related to clock synchronization between a clock of the navigation device and a local clock of the receiver;
    information related to the local clock of the receiver; and
    information related to data synchronization between the receiver and a reference navigation device.

4.  The method of claim 1, 2 or 3, wherein
    the retrieved information includes an ephemeris of the navigation device and a position of the receiver; and
    a local clock of the receiver has been synchronized with a clock of the navigation device

5.  The method of claim 4, wherein the step of re-establishing the data synchronization includes the steps of:

    estimating a distance between the navigation device and the receiver based on the ephemeris of the navigation device and the position of the receiver;
    determining a sending time of the navigation data from the navigation device based on the distance between the navigation device and receiver; and
    computing data synchronization information based on the sending time of the navigation data.

6.  The method of one of claims 1 to 5, wherein
    the retrieved information includes TOW and navigation bit count; and
    a local clock of the receiver continuously runs for a time interval after the data synchronization was interrupted.

7.  The method of claim 6, wherein the step of re-establishing the data synchronization includes the steps of:

    determining a sending time of the navigation data from the navigation device based on the TOW, navigation bit count, and the time interval; and
    computing synchronization information based on the sending time of the navigation data.

8. The method of one of claims 1 to 7, further comprising the step of:

retrieving information related to a reference data synchronization between the receiver and a reference navigation device from the receiver, wherein the receiver receives reference navigation data from the reference navigation device.

9. The method of one of claims 1 to 8, wherein
the retrieved information related to the data synchronization includes an ephemeris of the navigation device and a position of the receiver; and
the retrieved information related to the reference data synchronization includes an ephemeris of the reference navigation device and a reference sending time of the reference navigation data from the reference navigation device.

10. The method of claim 9, wherein the step of re-establishing the data synchronization includes the steps of:

estimating a distance between the navigation device and the receiver based on the ephemeris of the navigation device and the position of the receiver and a reference distance between the reference navigation device and the receiver based on the ephemeris of the reference navigation device and the position of the receiver;
determining a sending time of the navigation data sent from the navigation device based on the reference sending time of the reference navigation data sent from the reference navigation device and the distance and reference distance; and
computing synchronization information based on the sending time of the navigation data.

11. A receiver for navigation comprising a navigation processing unit comprising:

a default data synchronization module configured to establish data synchronization between the receiver and a navigation device based on matching of a header of navigation data, wherein the receiver receives the navigation data from the navigation device;
a synchronization information storage configured to store information related to the data synchronization; and
a rapid data synchronization module configured to:

if, subsequently, the data synchronization is interrupted, retrieve the information related to the data synchronization from the synchronization information storage, and
re-establish the data synchronization between the receiver and the navigation device based on the retrieved information.

12. The receiver of claim 11, wherein the navigation device includes a satellite.

13. The receiver of claim 11 or 2, wherein the information related to the data synchronization includes at least one of:

an ephemeris of the navigation device;
a position of the receiver;
TOW and navigation bit count;
information related to clock synchronization between a clock of the navigation device and a local clock of the receiver;
information related to the local clock of the receiver; and
information related to data synchronization between the receiver and a reference navigation device.

14. The receiver of claim 11, 12 or 13, wherein
the retrieved information includes an ephemeris of the navigation device and a position of the receiver; and
a local clock of the receiver has been synchronized with a clock of the navigation device

15. The receiver of claim 14, wherein the rapid data synchronization module is further configured to:

estimate a distance between the navigation device and the receiver based on the ephemeris of the navigation device and the position of the receiver;
determine a sending time of the navigation data from the navigation device based on the distance between the navigation device and receiver; and
compute data synchronization information based on the sending time of the navigation data.

**16.** The receiver of one of claims 11 to 15, wherein
the retrieved information includes TOW and navigation bit count; and
a local clock of the receiver continuously runs for a time interval after the data synchronization was interrupted.

**17.** The receiver of claim 16, wherein the rapid data synchronization module is further configured to:

determine a sending time of the navigation data from the navigation device based on the TOW, navigation bit count, and the time interval; and
compute synchronization information based on the sending time of the navigation data.

**18.** The receiver of one of claims 11 to 17, wherein the rapid data synchronization module is further configured to:

retrieve information related to a reference data synchronization between the receiver and a reference navigation device from the receiver, wherein the receiver receives reference navigation data from the reference navigation device.

**19.** The receiver of one of claims 11 to 18, wherein
the retrieved information related to the data synchronization includes an ephemeris of the navigation device and a position of the receiver; and
the retrieved information related to the reference data synchronization includes an ephemeris of the reference navigation device and a reference sending time of the reference navigation data from the reference navigation device.

**20.** The receiver of claim 19, wherein the rapid data synchronization module is further configured to:

estimate a distance between the navigation device and the receiver based on the ephemeris of the navigation device and the position of the receiver and a reference distance between the reference navigation device and the receiver based on the ephemeris of the reference navigation device and the position of the receiver;
determine a sending time of the navigation data sent from the navigation device based on the reference sending time of the reference navigation data sent from the reference navigation device and the distance and reference distance; and
compute synchronization information based on the sending time of the navigation data.

**21.** A machine-readable tangible and non-transitory storage medium comprising a computer program adapted to perform a method according to one of claims 1 to 10.

100

SATELLITE ~104    SATELLITE ~104    SATELLITE ~104

106

~102

RECEIVER

RF FRONT-END ~108 → BASEBAND PROCESSING UNIT ~110 → NAVIGATION PROCESSING UNIT ~112

DEFAULT DATA SYNC MODULE ~118

RAPID DATA SYNC MODULE ~120

LOCAL CLOCK ~114 →

DISPLAY ~116

EP 2 703 842 A1

FIG. 1

FIG. 2

Diagram content (NAVIGATION PROCESSING UNIT, ref 112):
- DEFAULT DATA SYNC MODULE (118) → SYNC INFO STORAGE (210)
- SYNC INFO STORAGE (210) → SWITCHING MODULE (208)
- CHECKING MODULE (212) → SYNC INFO STORAGE (210)
- SWITCHING MODULE (208) → 1ST RAPID DATA SYNC MODULE (202), 2ND RAPID DATA SYNC MODULE (204), 3RD RAPID DATA SYNC MODULE (206)

EP 2 703 842 A1

ESTABLISH DATA SYNC BETWEEN RECEIVER AND
NAVIGATION DEVICE BASED ON
MATCHING OF DATA HEADER — 302

DATA SYNC
INTERRUPTED? — 304

YES

RETRIEVE INFO RELATED TO THE DATA SYNC FROM
RECEIVER — 306

RE-ESTABLISH DATA SYNC BETWEEN RECEIVER AND
NAVIGATION DEVICE BASED ON THE RETRIEVED INFO — 308

FIG. 3

PERFORM INITIAL DATA SYNC BY SUBFRAME HEADER MATCHING — 402

STORE SYNC INFO OBTAINED FROM INITIAL DATA SYNC — 404

DETERMINE ONE OF RAPID DATA SYNC METHODS BASED ON AVAILABLE SYNC INFO — 406

PERFORM DETERMINED RAPID DATA SYNC BASED ON AVAILABLE SYNC INFO — 408

VERIFY SYNC INFO OBTAINED FROM RAPID DATA SYNC — 410

UPDATE VERIFIED SYNCH INFO — 412

FIG. 4

FIG. 5

ESTIMATE DISTANCE BETWEEN NAVIGATION DEVICE AND RECEIVER 602

DETERMINE SENDING TIME OF NAVIGATION DATA BASED ON THE DISTANCE 604

COMPUTE SYNC INFO BASED ON THE SENDING TIME 606

# FIG. 6

OBTAIN EPHEMERIS OF SATELLITE FROM RECEIVER — 702

↓

CALCULATE POSITION OF SATELLITE — 704

↓

OBTAIN POSITION OF RECEIVER FROM RECEIVER — 706

↓

CALCULATE TRANSMISSION TIME OF NAVIGATION DATA — 708

↓

OBTAIN RECEIVING TIME OF NAVIGATION DATA FROM LOCAL CLOCK — 710

↓

CALCULATE SENDING TIME OF NAVIGATION DATA — 712

↓

CALCULATE TOW — 714

↓

CALCULATE BITCNT — 716

FIG. 7

EP 2 703 842 A1

FIG. 8

OBTAIN PREVIOUS SYNC INFO FROM RECEIVER — 902

DETERMINE SENDING TIME OF NAVIGATION DATA BASED ON THE PREVIOUS SYNC INFO — 904

COMPUTE SYNC INFO BASED ON THE SENDING TIME — 906

FIG. 9

OBTAIN TOW AND BITCNT FROM PREVIOUS SYNC INFO — 1002

OBTAIN TIME INTERVAL FROM LOCAL CLOCK — 1004

CALCULATE SENDING TIME — 1006

CALCULATE TOW — 1008

CALCULATE BITCNT — 1010

FIG. 10

FIG. 11

ESTIMATE 1ST DISTANCE BETWEEN REF NAVIGATION DEVICE AND RECEIVER AND 2ND DISTANCE BETWEEN TARGET NAVIGATION DEVICE AND RECEIVER — 1202

DETERMINE SENDING TIME OF TARGET NAVIGATION DATA SENT FROM TARGET NAVIGATION DEVICE BASED ON SENDING TIME OF REF NAVIGATION DATA SENT FROM REF NAVIGATION DEVICE AND THE DISTANCES — 1204

COMPUTE SYNC INFO BASED ON THE SENDING TIME — 1206

FIG. 12

OBTAIN EPHEMERIDES OF REF AND TARGET SATELLITES FROM RECEIVER — 1302

CALCULATE POSITIONS OF REF AND TARGET SATELLITES — 1304

CALCULATE 1ST TRANSMISSION TIME BASED ON DISTANCE BETWEEN REF SATELLITE AND RECEIVER — 1306

CALCULATE 2ND TRANSMISSION TIME BASED ON DISTANCE BETWEEN TARGET SATELLITE AND RECEIVER — 1308

CALCULATE TRANSMISSION TIME DIFFERENCE — 1310

OBTAIN 1ST RECEIVING TIME OF REF NAVIGATION DATA AND 2ND RECEIVING TIME OF TARGET NAVIGATION DATA — 1312

CALCULATE RECEIVING TIME DIFFERENCE — 1314

CALCULATE SENDING TIME OF TARGET NAVIGATION DATA — 1316

CALCULATE TOW — 1318

CALCULATE BITCNT — 1320

FIG. 13

_112_

_1404_

_118_

DEFAULT DATA SYNC
MODULE

_120_

RAPID DATA SYNC
MODULE

_1402_

PROCESSOR

NAVIGATION
PROCESSING UNIT

# FIG. 14

Europäisches
Patentamt

European
Patent Office

Office européen
des brevets

**EUROPEAN SEARCH REPORT**

Application Number

EP 13 17 9372

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/152878 A1 (WANG CHI-SHIN [US] ET AL) 5 July 2007 (2007-07-05)<br><br>* paragraph [0010] *<br>* paragraphs [0027], [0028] *<br>* paragraphs [0031] - [0033], [0035] *<br>----- | 1-4,6-9, 11-14, 16-19,21 | INV.<br>G01S19/24 |
| X | US 2008/111736 A1 (HAN SHAOWEI [US]) 15 May 2008 (2008-05-15)<br><br>* paragraph [0012] *<br>* paragraphs [0018] - [0021] *<br>* paragraph [0050] *<br>* claim 1 *<br>----- | 1-4,6-9, 11-14, 16-19,21 | |

TECHNICAL FIELDS
SEARCHED (IPC)

G01S

The present search report has been drawn up for all claims

| Place of search | Date of completion of the search | Examiner |
|---|---|---|
| The Hague | 18 October 2013 | Naddeo, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 703 842 A1**

## ANNEX TO THE EUROPEAN SEARCH REPORT
## ON EUROPEAN PATENT APPLICATION NO.

EP 13 17 9372

This annex lists the patent family members relating to the patent documents cited in  the above-mentioned European search report.
The members are as contained in the European Patent Office EDP file on
The European Patent Office is in no way liable for these particulars which are merely given for the purpose of information.

18-10-2013

| Patent document cited in search report | | Publication date | Patent family member(s) | | Publication date |
|---|---|---|---|---|---|
| US 2007152878 | A1 | 05-07-2007 | CN | 101410725 A | 15-04-2009 |
| | | | EP | 1979760 A2 | 15-10-2008 |
| | | | US | 2007152878 A1 | 05-07-2007 |
| | | | WO | 2007076539 A2 | 05-07-2007 |
| US 2008111736 | A1 | 15-05-2008 | NONE | | |

EPO FORM P0459

For more details about this annex : see Official Journal of the European Patent Office, No. 12/82

30